# EUROPEAN PATENT APPLICATION

(11) **EP 4 851 843 A1**
(43) Date of publication of application: **09.12.2026**
(21) Application number: 25181208.7
(22) Date of filing: 05.06.2025
(51) Int. Cl.: G06F 21/62, H04L 9/08, H04L 9/40, H04W 12/02

(54) **A COMPUTER-IMPLEMENTED METHOD FOR ASSOCIATING USER INTERACTION WITH CONTENT**

(71) Applicant: Network Guard Pte. Ltd., 188778 Singapore (SG)
(72) Inventor: ZANG, Yichen, HK (HK); MEMBREY, Peter Loi, HK (HK)
(74) Representative: Noble, Nicholas

(57) **Abstract**

The disclosure relates to a computer-implemented method for associating user interaction with content performed at a user device, a computer-implemented method for associating user interaction with content performed at an anonymising distributed analysis system (DAS), and a computer-implemented method for associating user interaction with content performed at an entity associated with the content. In these complementary methods, first and second records for first and second sub-systems of the DAS are used, both the first and second records being required in order to recover indication data and metadata encoded in said records.

## Description

### TECHNICAL FIELD

The disclosure relates to a computer-implemented method for associating user interaction with content performed at a user device, a computer-implemented method for associating user interaction with content performed at an anonymising distributed analysis system, and a computer-implemented method for associating user interaction with content performed at an entity associated with the content.

### BACKGROUND

The attribution of a user interaction to a content source enables the tracking of user interactions in contexts such as emergency messaging, confirmations of message notification, online advertising, app improvement, where the goal is to link user actions (such as clicks or app installs) to specific content such as announcements, mass notifications, app installations, ads, etc.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a block diagram of logic for implementing the methods described herein in a computing apparatus or system;
Fig. 2 shows a schematic representation of a data record which may be used in conjunction with the distributed analysis system of Fig. 1;
Fig. 3 shows a flowchart of a method performed at a user device for associating user interaction with content;
Fig. 4 shows a flowchart of a method performed at a sub-system of a Distributed Analysis System (DAS) for associating user interaction with content;
Fig. 5 shows a flowchart of a method performed at an entity associated with the content for associating user interaction with content; and
Fig. 6 shows a computing device for implementing the operations described herein.

### OVERVIEW

In overview, the disclosure relates to an approach for maintaining user privacy while gathering data on how users interact with content from a content provider. Users provide data regarding their interactions with the content to each system of a plurality of data gathering systems, but do so in such a way that each individual data gathering system cannot make use of the data provided by the users. In particular, the data is encrypted so that the data provided to each of the systems needs to be brought together in order to retrieve meaningful information regarding user interactions. Then, a content provider in possession of a suitable decryption key can aggregate the data stored across the plurality of data gathering systems to retrieve that meaningful information, without the users' privacy being breached by either system in the process. Moreover, the data can be stored and aggregated in such a way that, although the content provider can retrieve meaningful information about the users' interactions, the content provider cannot obtain information about an individual user.

### DETAILED DESCRIPTION

An approach for content attribution could be to collect device identifiers and track user behaviour across platforms. While that would be effective for attribution, the collection of potentially sensitive data like device IDs and behavioural patterns could facilitate the tracking of sensitive individual data across different platforms. That could then be used to build detailed user profiles, enabling potentially intrusive tracking practices. While data could be anonymised, the correlation of identifiers between different platforms could still lead to potential privacy violations. The inventors of the present application have appreciated these issues and have addressed them by providing a system that balances effective attribution with privacy guarantees to enable the provision of meaningful insights for content providers.

Accordingly, this disclosure is directed to a privacy-preserving platform that enables high-quality attribution. A system is described wherein attribution partners can obtain all the necessary data for attribution, while maintaining robust privacy protections for end users. The system allows for the linking of processes such as specific announcements, mass notifications, advertising campaigns, etc. to successful interactions, such as clicks or app installs, without compromising user privacy.

As is described in more detail below, users may submit their statistical data to the system in an encrypted and privacy-preserving manner, and content providers can gain insights from the aggregated data without harming the user's privacy. Examples of content providers include: emergency service providers, messaging providers, website monitors, app providers/developers, and advertisers.

In particular, the below disclosure describes complementary methods for a user device (e.g., a device on which content may be displayed), for a sub-system of an anonymising distributed analysis system (DAS) (a part of the analysis system described herein), and for an entity associated with content (e.g., content with which a user can interact). These methods allow a user to submit content-related statistical data to the analysis system in an encrypted and privacy-preserving manner, and providers of content (e.g., advertisers) to gain insights from the aggregated data without impinging upon the user's privacy.

For example, a provider of content may be an application developer or advertiser who publishes applications and/or advertisements to a user and submits analytical tasks to an analysis system. A user may be someone who interacts with the applications and/or advertisements, i.e., by clicking, watching, etc. When a user interacts with the applications and/or advertisements, related statistical data can then be submitted to an analysis system in an encrypted form. An analysis system may be provided by a service provider allowing collection of statistical data from users and submission of analytical tasks by providers of content.

To illustrate this further, consider an example in which *M* users, *N* advertisers, and 2 analysis systems are provided, the two analysis systems being deployed in two service providers. The advertisers first publish their apps to the users. The users install and run the apps. The apps report encrypted ad-related statistical data records to the two systems. Both systems process the statistical data records and store them in their databases. When an advertiser submits an analytical task to the systems, both systems retrieve relevant records from their respective databases and perform certain operations over the records to derive the answer to the task for the advertiser.

In the present disclosure, user devices may be honest or malicious. For example, honest users will run the apps as intended, while malicious users will modify the codes to submit arbitrary content to the system. The sub-systems of the DAS may be semi-honest. For example, they will perform all the operations specified by an entity associated with content, but may wish to acquire data that they should not have from its operations. Each sub-system may be deployed in a different trust domain (i.e., a different service provider, e.g., cloud service provider) than other sub-systems; in other words, the sub-systems may be configured so that they may not collude with each other to acquire data that they should not have. The entity associated with the content (e.g., an advertiser) may be honest or malicious. Honest entities will only query analytical data from their apps, while malicious entities may try to corrupt a sub-system to acquire analytical data from apps not belonging to them.

In this context, the approach envisioned by the present disclosure seeks to provide:
- user privacy protection, i.e., for each individual user, no party other than the user itself can learn its raw content-related statistical data;
- content provider privacy protection, i.e., for each content provider or entity associated with the content, no party other than the provider or entity itself can learn analytical data from its content(s); and
- efficiency, i.e., each sub-system of the DAS should maintain a high throughput when processing data from users, and, where possible, finish data aggregation tasks in polynomial time or faster.

The complementary methods proposed by the present disclosure and logic for implementing them are now described in more detail.

### Logic elements

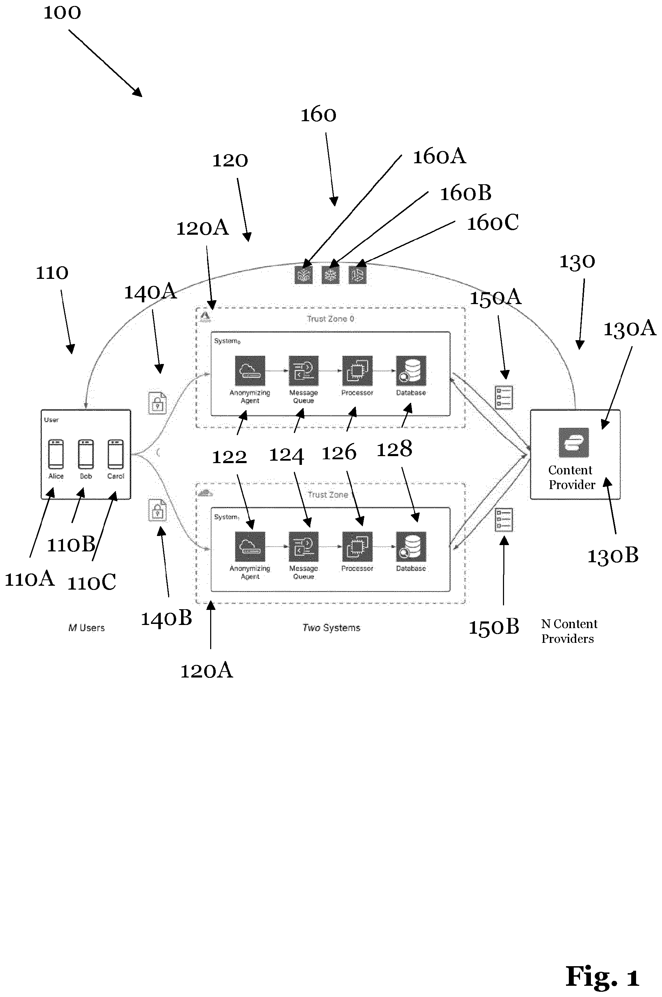

Referring to Fig. 1, the methods described herein may be implemented in a computing apparatus or system 100 having the following logic/architecture.

In the system 100, there may be any number of user devices 110 capable of interacting with content 160, for example a first user device 110A, a second user device 110B, and a third user device 110C. Additionally, there may be any number of entities 130 associated with content 160 (e.g., capable of providing content 160), for example a first entity 130A and a second entity 130B. Further, there may be a distributed analysis system (DAS) 120 comprising a plurality of sub-systems, for example a first sub-system 120A and a second sub-system 120B. The terms "user device" and "user may be used interchangeably to refer to a device of an end user (such as a smartphone, laptop, etc.) and to the end user itself.

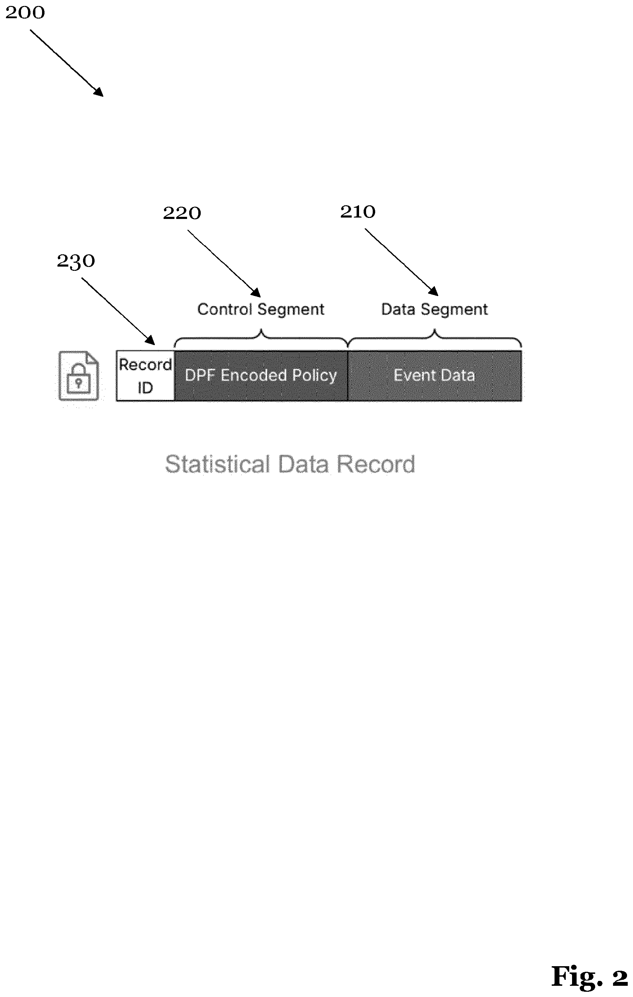

The entities 130 associated with the content 160 are capable of providing the content 160 to the user devices 110. For example, the entities 130 can publish the content 160 - for example by making an application available on an application store or by publishing an advertisement on a website. The user devices 110 are capable of interacting with content 160 (e.g., apps, ads 160A, 160B, 160C), of generating respective (data) records 140A, 140B descriptive of user interaction with the content 160 for each sub-system 120A, 120B of the DAS 120, and of transmitting the records 140A, 140B to the relevant sub-system 120A, 120B of the DAS 120. For example each user device 110 can download an application from an application store and allow a user to run, and interact with, that application. Each sub-system 120A, 120B is capable of receiving records 140A/140B intended for it, performing certain processing operations on the records and storing the records in a database 128. For example, each sub-system 120A, 120B can establish communications with one or more user devices 110 to receive the records; each sub-system 120A, 120B can then process those records as described in more detail below. Each sub-system 120A, 120B is also capable of retrieving the records from its database 128 and sending the records to any of the entities 130 (e.g., in response to a query 150A, 150B from an entity 130) and/or of aggregating portions of the records 140A, 140B and sending a result of that aggregation to any of the entities 130. For example, each sub-system 120A, 120B may be configured to access its database 128 to store data and/or to query its database to retrieve data; each sub-system 120A, 120B may be configured to aggregate data retrieved from its database (e.g., add values in the data or certain portions thereof); each sub-system 120A, 120B may be configured to establish communications with one or more entities 130 to send the records and/or a result of a data aggregation. The entities 130 are further capable of requesting (e.g., sending queries to) and receiving records or aggregation results from any sub-system 120A, 120B of the DAS 120, and of recovering information/data descriptive of user interaction with the content 160 from the records 140A, 140B or aggregation results. For example, the entities 130 can send queries to each sub-system 120A, 120B which in turn enable each sub-system to query its database 128. The records 140A, 140B may be of the kind discussed below with reference to Fig. 2.

Although it may be sufficient to rely on a distributed analysis system (DAS) 120 comprising two sub-systems, for example a first sub-system 120A and a second sub-system 120B, any number of sub-systems may be used, each sub-system being configured as described above. Different sub-systems may be used at different times, based on their processing capacity or suitability for handling certain types of records; therefore, the plurality of sub-systems may comprise different sub-systems over time.

Different sub-systems of the DAS 120 may be respectively provided by separate cloud service providers. As explained above, each sub-system may be deployed in a different trust domain (i.e., a different service provider, e.g., cloud service provider) than other sub-systems; this is so that sub-systems may not collude with each other to acquire data that they should not have. In some implementations, the different providers operate respectively in a different country/region (e.g., one in the US and one in China, one in the EU and one in India, etc.), so that it is more difficult to pressure those providers to collude. Similarly, in some implementations, the different providers belong to different companies - for example direct competitors.

As those skilled in the art will appreciate, the apparatus or system 100 need not be provided in its entirety as a single product. Rather, logic may be provided separately for any of the users 110, any of the sub-systems of the DAS 120, and/or any of the entities 130 associated with the content 160. In other words, the apparatus or system 100 may be provided as a distributed system comprising different interrelated products.

Furthermore, the logic described above may be provided by modifying, or by providing relevant computer instructions to, existing computing apparatus or systems, e.g., the logic may be provided by commonly available apparatus or systems executing suitably adapted software. Additionally, although Fig. 1 shows the logic described above as logic blocks, Fig. 1 does not imply a particular hardware implementation, though a specially designed one may be provided using approaches known in the art; accordingly, the logic described above may be provided wholly in software, party in hardware and partly in software, and/or wholly in hardware.

Accordingly, a computing apparatus or system 100 configured to perform any of the methods 300, 400, 500 described below is provided. Also, one or more computer-readable media storing instructions which, when executed by a computing apparatus or system 100, cause the computing apparatus or system to perform any of the methods 300, 400, 500 described below may be provided. Similarly, a computer program or computer program product may be provided to cause the computing apparatus or system to perform any of the methods 300, 400, 500 described below.

### Method for associating user interaction with content - User device

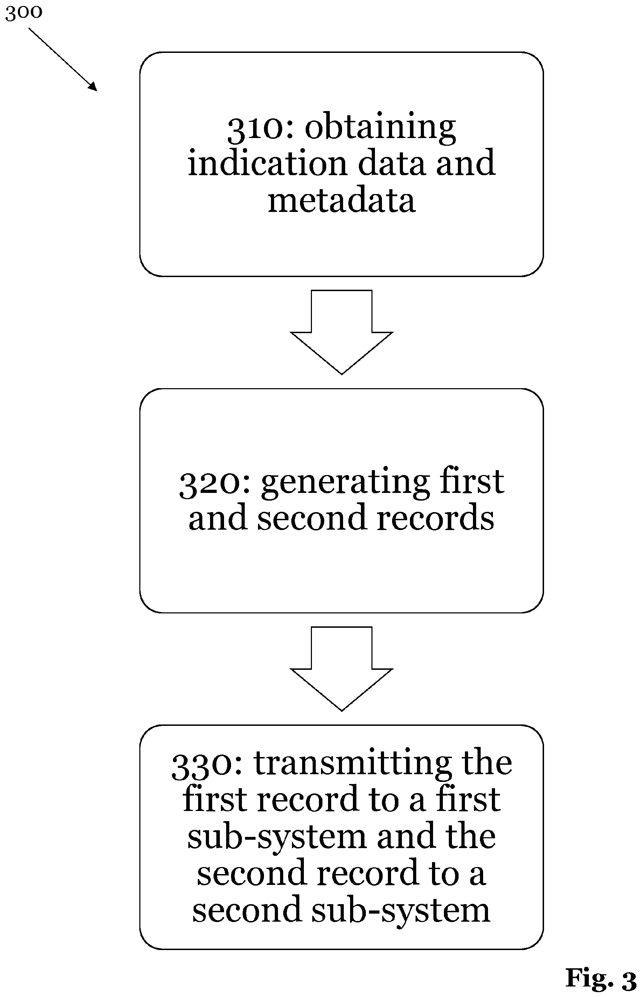

Referring to Fig. 3, a computer-implemented method 300 for associating user interaction with content 160 may be performed at a user device 110 of a system 100 (described above in relation to Fig. 1).

At step 310, the method comprises obtaining indication data and metadata descriptive of user interaction with the content 160. The indication data may comprise an indication of what the user has done with the content 160 (e.g., clicked on the content, visualised the content, installed/deleted the content, executed the content, sent/shared the content, etc.) and/or of how long/how many times the user has interacted with the content (e.g., how many clicks or installs, how long the visualisation lasted, an execution time of the content before the execution was interrupted, etc.). The indication metadata may comprise an indication of what content 160 or a group of contents to which content 160 the indication data relates to (e.g., a certain interaction relates to a content 160A, another interaction relates to another content 160B or 160C).

At step 320, the method comprises generating first and second records 140A, 140B each comprising a first portion 210 based on the indication data and a second, encrypted portion 220 based on the indication metadata, wherein both the first and second records are required in order to recover the indication data and metadata.

Generating first and second records 140A, 140B may comprise obfuscating the indication data to obtain the first portion 210 based on the indication data. In some implementations, the obfuscating may use a Laplace noise distribution to obfuscate the indication data. The Laplace noise distribution may be based on a first parameter influencing expected obfuscated indication data and on a second parameter influencing a variance of the obfuscated indication data; the first parameter may be selected based on whether the indication data descriptive of user interaction with the content 160 is indicative of a count of user interactions with the content or of a measure of a duration of user interaction with the content.

Generating first and second records 140A, 140B may comprise encoding the indication metadata into the second portion 220 of the first and second records 140A, 140B as respective first and second Function Secret Sharing, FSS, keys. In some implementations, the encoding uses a Distributed Points Function (DPF) scheme, which may optionally be selected based on a security type of the user interaction.

The FSS keys may be determined in accordance with a scheme specified by an entity 130 associated with the content 160. In some implementations, the entity may specify the scheme when providing the content 160 to the users 110. For example, the scheme may be embedded into the content 160 and specify how keys are to be generated. An example record including the first portion 210 and second portion 220 is described below with reference to Fig. 2.

At step 330, the method comprises transmitting the first record 140A to a first sub-system 120A of an anonymising distributed analysis system (DAS) 120 and transmitting the second record 140B to a second sub-system 120B of the DAS 120. The first and second sub-systems 120A, 120B may be respectively provided by separate first and second cloud service providers.

### Method for associating user interaction with content - Sub-system of a DAS

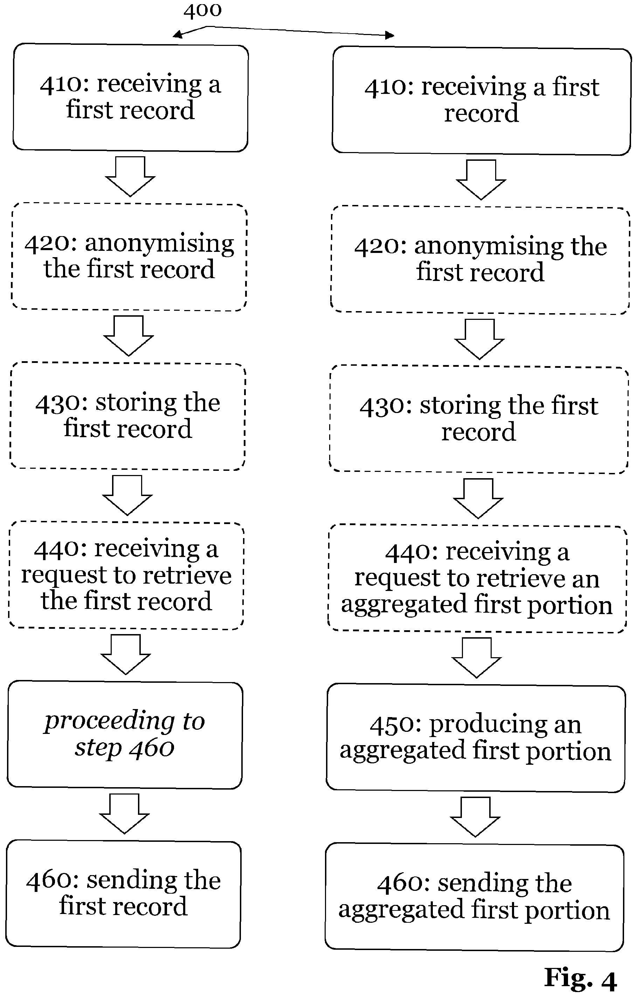

Referring to Fig. 4, a computer-implemented method 400 for associating user interaction with content 160 may be performed at a sub-system 120A of an anonymising distributed analysis system (DAS) 120 of a system 100 (described above in relation to Fig. 1).

At step 410, the method comprises receiving, from a user device 110, a first record 140A comprising a first portion 210 that was generated based on indication data descriptive of the user interaction with the content 160 and also comprising a second, encrypted portion 220 that was generated based on indication metadata descriptive of the user interaction with the content 160. As mentioned above, it is intended that both a first and a second encrypted records 140A, 140B are required in order to recover the indication data and metadata; accordingly, a second record 140B that was also generated based on the indication data and metadata and that is not received at the sub-system 120A is required in addition to the first record 140A to recover the indication data and metadata. As discussed above with reference to Fig. 1, the first sub-system 120A may be provided by a first cloud service provider separate from a second cloud service provider (e.g., providing a second sub-system 120B) at which the second record 140B was received.

At step 420, the method may comprise anonymising the first record 140A by removing a third portion 230 of the record indicative of which user 110 has generated the first record 140A. However, step 420 is not necessary in all implementations, as in some cases user privacy can be guaranteed to an adequate extent without this step; accordingly, although the DAS has been described herein as an "anonymising" DAS, it is also contemplated that the anonymising aspect of the DAS may be omitted in any of the examples described herein, i.e., the DAS need not be an "anonymising" DAS.

At step 430, the method may comprise storing the first record 140A in a first database 128.

At step 440, the method may comprise receiving a request 150A to retrieve the first record 140A from the entity 130 associated with the content 160. The sending the first record of step 460 discussed below may then be in response to the receiving the request 150A. Alternatively, at step 440, the method may comprise receiving, from the entity 130 associated with the content 160, a request 150A to retrieve an aggregated first portion (described below in relation to step 450).

It will be appreciated that a request 150A is not necessary to retrieve data from the sub-system 120A; indeed, the sub-system 120A may be configured to automatically provide data to an entity 130, without receiving a request 150A from that entity (e.g., to periodically push data, such as records or aggregation results, to that entity). This may also be the case after an initial request has been received, i.e., after that initial request the sub-system 120A continues to provide data automatically (e.g., for a period of time, for a certain group of records, etc.).

As discussed above, the second portion 220 of the first record 140A may be encoded using a FSS key, optionally a DPF key. Correspondingly, the request 150A may include a FSS key, which may optionally be a DPF key. The FSS key may be determined in accordance with a scheme specified by an entity 130 associated with the content 160. In some implementations, the entity may specify the scheme as part of providing the content 160 to the users 110. For example, the scheme may be embedded into the content 160 and specify how keys are to be generated. An FSS key generated in accordance with that scheme can then be provided to the sub-system 120A during the process of requesting data from that sub-system.

At step 460, the method comprises sending the first record 140A to an entity 130 associated with the content 160. Alternatively, at step 450, the method comprises aggregating the first portion 210 of the first record 140A with one or more other first portions of other records which have been received by the first sub-system 120A to produce an aggregated first portion. Then, at step 460, the method comprises sending the aggregated first portion to an entity 130 associated with the content 160. Those skilled in the art will recognise that in certain implementations it is advantageous from a privacy perspective and/or to limit the amount of data transmitted to only send an aggregated first portion, particularly where many records 140A need to be sent over a period of time. However, it will also be appreciated that records 140A present in a database 128 of a sub-system 120A can also be transmitted as "raw" records, letting the entity 130 associated with the content 160 perform any necessary data aggregation.

As discussed above in relation to Fig. 1, there may be any number of sub-systems of the DAS 120 in the system 100. Each of these sub-systems may perform the method 400. For example, a second sub-system 120B may be provided, which receives a second encrypted record 140B that was also generated based on the indication data and that is not received at the sub-system 120A. The second encrypted record 140B may be anonymised and stored in a similar way as the first encrypted record 140A, but at the second sub-system 120B. Another request 150B can be received at sub-system 120B to retrieve the second encrypted record 140B, and the second encrypted record 140B may be sent to the entity 130 that made the request 150A discussed above. Of course the request 150B may also be to retrieve a second aggregated first portion of the kind described in relation to steps 450 and 460, and it is not necessary that each sub-system of the DAS 120 use the same approach to aggregation and sending of data.

### Method for associating user interaction with content - Content provider

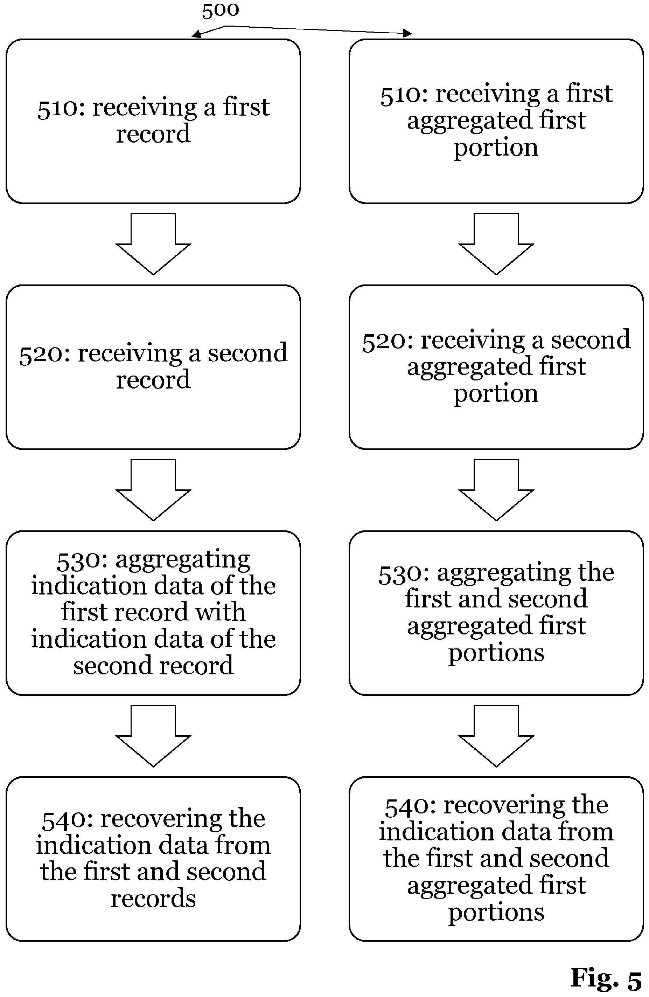

Referring to Fig. 5, a computer-implemented method 500 for associating user interaction with content 160 may be performed at an entity 130 of a system 100 (described above in relation to Fig. 1) associated with content 160.

At step 510, the method comprises receiving a first record 140A from a first sub-system 120A of an anonymising distributed analysis system (DAS) 120, the first record comprising a first portion 210 that was generated based on indication data descriptive of the user interaction with the content 160 and a second, encrypted portion 220 that was generated based on indication metadata descriptive of the user interaction with the content 160. At step 520, the method comprises receiving a second record 140B from a second sub-system 120B of the DAS 120, the second record comprising a first portion 210 that was generated based on indication data descriptive of the user interaction with the content 160 and a second, encrypted portion 220 that was generated based on indication metadata descriptive of the user interaction with the content 160. As discussed above, both the first and second records 140A, 140B are required in order to recover indication data and metadata descriptive of user interaction with the content 160. It will be appreciated that steps 510 and 520 may occur in any order, or in parallel, or as a single operation.

At step 530, the method may comprise aggregating the indication data of the first record 140A with the indication data of the second record 140B.

At step 540, the method comprises recovering the indication data from the first and second records 140A, 140B.

Alternatively, at step 510, the method comprises receiving, from a first sub-system 120A of an anonymising DAS 120, a first aggregated first portion which has been produced by aggregating a first portion 210 of a first record 140A with one or more other first portions of other records which have been received by the first sub-system 120A. Correspondingly, at step 520, the method comprises receiving, from a second sub-system 120B of the anonymising DAS 120, a second aggregated first portion which has been produced by aggregating a first portion 210 of a second record 140B with one or more other first portions of other records which have been received by the second sub-system 120B. Similarly to the alternative steps 510 and 520 described above, both the first and second aggregated first portions are required in order to recover indication data descriptive of the user interaction with the content 160 and the first portions 210 are based on the indication data.

In this alternative, at step 530, the method may comprise aggregating the first and second aggregated first portions, and at step 540, the method comprises recovering the indication data from the first and second aggregated first portions.

As discussed above, the indication data may be obfuscated indication data, optionally indication data which has been obfuscated using a Laplace noise distribution. Accordingly, the recovering of step 540 may comprise reversing the obfuscation of the obfuscated indication data of the first and second records 140A, 140B.

As discussed above in relation to the method 400, the second portion 220 of the first and second record 140A, 140B may be encoded using FSS keys, optionally DPF keys. Therefore, where the entity 130 is provided with the first and second records rather than pre-aggregated first portions, the entity 130 may first perform an operation to retrieve data and metadata from those records using a FSS key, which may optionally be a DPF key. The FSS key may be determined in accordance with a scheme specified by the entity 130 associated with the content 160. In some implementations, the entity may specify the scheme as part of providing the content 160 to the users 110. For example, the scheme may be embedded into the content 160 and specify how keys are to be generated. An FSS key generated in accordance with that scheme can then be used during the process of retrieving data and metadata.

Those skilled in the art will appreciate that the methods 300, 400, 500 described above may be repeated for any number of first and second records 140A, 140B and users 110, and also in relation to any number of contents 160 from any number of corresponding entities 130. Indeed, although the methods 300, 400, 500 have been explained with reference to records relating to an individual user interaction by an individual user 110, a large number of interactions may occur across a large number of users.

Furthermore, as explained above, any number of sub-systems may be used in a DAS 120. Those skilled in the art will appreciate that the methods 300, 400, 500 described above may therefore be performed in such a way that more than two sub-systems need to receive a record and that more than two records or aggregated portions need to be obtained from the sub-systems; suitable FSS keys can be provided for this purpose. For example, there may be three sub-systems, each receiving a record from a user 110 and each later providing a record or an aggregated portion to an entity 130. Additionally or alternatively, methods 300, 400, 500 may also be performed in such a way that more than two sub-systems are used in a redundant way. For example, there may be three sub-systems, each receiving a record from a user 110, but only two sub-system are later required to provide a record or an aggregated portion to an entity 130.

Further details regarding the approaches introduced above will now be described.

### Implementations - Cryptography concepts

There are a number of cryptography concepts that may be used to implement the approached discussed above. Function Secret Sharing (FSS) is a lightweight cryptographic primitive that enables a client to create compact shares of a function *f*: {0,1}*^{m}*-> {0,1}*ⁿ*. Each function share will not reveal the secret element anchored in *f*, but the summation of their outputs at any point is the corresponding output value of *f*. Servers (e.g., sub-systems 120A, 120B) can utilise the shares to evaluate the criteria inside a query (e.g., requests 150A, 150B) while still preserving the predicates' confidentiality. For example, in a 2-party FSS scheme, we have two following properties on *f*:
- *Gen*(1*^{λ}, f)* → (*k*₀*, k*₁): given a function *f* and a security parameter *λ*, generates two FSS keys *k*₀ and *k*₁ that define the two function shares of *f*;
- *Eval*(*b, k_{b}, x* ∈ [*N*]) → F: given an input *x,* output value of the function share (for *b* ∈ {0, 1}) indexed by *x*.
Each FSS key alone reveals no information about *λ* or *f* in the scheme, thus this feature can be used as a secure building block.

Specifically, a special FSS scheme can be used: Distributed Point Functions (DPF). In a DPF scheme, the function *f* returns a value *β* on a single input *α* and 0 elsewhere: ${{f}_{α , β}}^{DPF} \left(x\right) = \left\{\begin{matrix}β , x = α \\ 0 , x \neq α\end{matrix}\right.$ Considering *k_*0*, k_*1 as two FSS keys generated in a DPF scheme, we have the following property: ${\sum }_{i = 0}^{1} DPF . Eval \left({k}_{i}, x\right) = \left\{\begin{matrix}β , x = α \\ 0 , x \neq α\end{matrix}\right.$

Another cryptography tool that may be used to implement the approached discussed above is Differential Privacy (DP). Specifically, a Laplace noise based DP technique may be used to obfuscate an original value. The obfuscation is defined by the formula below: $O \left(x, μ, b\right) ∼ Lap \left(x+μ,b\right)$ where *O* is the obfuscation function, *x* is the original input value, *µ* is the shift of the expectation of *x*, and *b* controls the diversity of the distribution.

Referring to Fig. 2, a record 140A, 140B comprising a first portion 210, a second portion 220, and a third portion 230 may be implemented as a statistical data record 200, which can, for example, be transmitted by an application. For each user interaction, also referred to herein as *event* (e.g., ad clicking), two data records *r*₀*, r*₁ may be generated and sent to two systems *System*₀*, System*₁ respectively (e.g., the sub-systems 120A, 120B of the DAS 120).

Each statistical data record 200 may comprise three parts: a record ID 230, a control segment 220, and a data segment 210. The record ID is a unique user 110 identifier (UUID) of each record. The control segment contains a control policy encoded with a DPF key, e.g., *app_info, event_type,* etc. The data segment contains the data associated with the event, for example the indication data descriptive of user interaction with the content 160 discussed above. For example, "number of clicks" for a click event.

Returning to the discussion of DPFs, three different schemes for control policy encoding are discussed below which can be used in the control segment.

A Unique DPF scheme requires a unique pair of DPF keys which must be generated for each event. In this scheme, all events have different DPF key pairs, such that breach of database or program code will not cause the disclosure of previous user data. This scheme has the highest level of security, but it is also the slowest one among the three schemes in terms of data reporting and data aggregation in the subsequent procedures; indeed, DPF keys must be generated and evaluated for each event record, which causes heavy computational overhead.

A Rotational DPF scheme requires DPF key pairs to be rotated according to a predefined schedule. Within the lifetime of each DPF key pair, events of the same type are allowed to reuse the previously generated DPF key pair. This scheme is less secure than the Unique DPF scheme, such that the breach of historical records may disclose the metadata of certain records (i.e., an adversary may deduce which records belong to the type of event). However, since the DPF key pairs are rotated periodically, the breach can be restricted to a minimum scale. Moreover, DPF key generation/evaluation only needs to be performed once for the same type of events, which causes less computational overhead compared to the Unique DPF scheme.

A Static DPF scheme requires using static DPF key pairs for the same type of events. In this scheme, events of the same type can reuse the same DPF key pair, which minimizes the computational overhead in terms of DPF key generation/evaluation. However, the breach of database or program code may lead to the disclosure of more metadata compared to the other two schemes (i.e., an adversary may deduce the *event_type* or the app vendor by observing which records are in the same type). Therefore, the Static DPF scheme has the least security among the three schemes, but it is also the fastest one.

Those skilled in the art will appreciate that even though certain metadata of data records may be disclosed in the Rotational DPF/Static DPF schemes, the security of data records is still guaranteed since the records are still under encryption.

From among the three encoding schemes above and other schemes as are known to those skilled in the art, the most appropriate one (or combination) can be chosen for each given type of *event.* Then, a hash of the control policy can be computed and mapped to a finite field *Zₘ* of a specified DPF function with modulo, and two corresponding DPF keys can be generated: *k₀, k*₁ *= DPF. Gen*(*hash*(*policy*)% *M*)*. k*₀, *k*₁ is the DPF encoded key pair for the control policy. Then, *k*₀ is embedded into the control segment of *r*₀, and *k*₁ is embedded into the control segment of *r*₁ . The control policy can be periodically/dynamically updated to further minimize the leakage on data records' metadata.

Regarding the data obfuscation discussed above, each event to which data d is associated can be obfuscated with the Laplace noise. For example, for each *event_type,* the content provider should specify two secret parameters *µ* and *b*, which should not be revealed to either system (e.g., either of sub-systems 120A, 120B). Then, *d* can be converted into *O*(*d*)*~Lap*(*d + µ, b*)*.* Finally, *O*(*d*) is embedded into the data segment of both *r*₀ and *r*₁.

The parameter *µ* controls the offset of the expected value *E*(*O*(*d*)) of *O*(*d*), while the parameter *b* to controls the variance of *O*(d). Accordingly, there may be different strategies to select the parameters *µ* and b.
- For counting tasks (e.g., counting App downloads), all content providers are suggested to set *µ* = 1 - d. Setting *µ* to other values may also fulfil statistical purposes, but significant outlier sets of data points will make the systems aware that they belong to a particular type of events, which may eventually result in a leakage of metadata.
- For measuring tasks (e.g., measuring watching time over a certain Ad), the content provider can specify a value for *µ* they deem appropriate. For example, in a watching-time measurement task, if the estimated average watching time is E(d), the content provider can set *µ* = 1 - *E*(*d*)*.* In that case, the distribution of data points from this task will be mixed with other tasks including the counting tasks, and the systems will not be able to distinguish these data points from others.
- A larger b increases the dispersion of the data and better hides the distribution of the original data, while a smaller *b* reduces the bias caused by outliers on the estimation of *E*(*O*(*d*))*.*
- Certain analysis systems only support arithmetic over an integer field. When *µ* = 1 - *d* with only a few data points, the aggregation results may be highly biased. A smaller *b* should then be used, or one can also let *µ* = 10*ⁿ - d, n* = 1,2,3, ... to minimise the error, and then divide the aggregated result by 10*ⁿ* during data aggregation.

### Implementations - Record processing

As discussed above with reference to Fig. 4, a computer-implemented method 400 for associating user interaction with content 160 may be performed at a sub-system 120A of a DAS 120, and includes the steps of receiving 410 a first 140A and of sending 460 the first record 140A or aggregating 450 the first portion of a record into an aggregated first portion and sending 460 the aggregated first portion. After the receiving and before either kind of sending, the sub-system 120A may process the record 140A; the steps 420, 430 of anonymising and storing the first record 140A have already been introduced above, and are now discussed in more detail alongside other operations which the sub-system 120A may perform on the first record 140A.

A data record may be denoted as *r_{b}* ← (*id, k_{b}, O*(*d*)), with *b* ∈ {0,1}, and each *r_{b}* is sent to a *system_{b}* respectively. Upon receiving the record *r_{b}, system_{b}* may process the record in a sequence as described below. It will be appreciated that that sequence is given as an example, but that those skilled in the art can rearrange that sequence in a different order and add or remove operations to achieve the same objectives; moreover, not all the operations in the sequence are required in combination, as each fulfils a different purpose.

Firstly, an Anonymizing Agent 122 may act as reverse proxy to first accept the record 140A, 140B from the user. The Anonymizing Agent 122 can shadow the identity-related metadata 230 (e.g., source IP) of the record from subsequent modules 124, 126, 128 of the *system_{b}.* If the Anonymizing Agent 122 in one system 120A receives the record 140A, it may notify an anonymizing agent 122 in the another system 120B to check whether the other agent has also received a corresponding record 140B with the same Record ID 230. If so, both agents may remove the Record ID 230 from *r*₀ and *r*₁ and put their respective record into a Message Queue 124 ; otherwise (e.g., if no same-ID record is found before a timeout), the Anonymizing Agent 122 may discard the record 140A to ensure data consistency between the two systems 120A, 120B.

Secondly, a Message Queue 124 can receive *r_{b}* from the Anonymizing Agent 122, and wait for a Processor 126 to pull that record. Those skilled in the art will understand that measures may need to be taken to ensure consistency in the order of data in the queues of another *system_{b}.*

Thirdly, there may be a data processing stage, in which a Processor 126 may have any of the following functionalities:
- DPF Key De-duplication - In Rotational/Static DPF schemes, DPF keys are reused by multiple records. To avoid the additional computational and storage space overhead associated with duplicate DPF keys, the Processor may create a table of indices associated with the keys and data points. Duplicated DPF keys will then not be stored to a Database (e.g., the database 128), but a linkage record will be created and stored instead.
- Adding Additional Metadata - The Processor may also add additional metadata, such as a timestamp, to the records, which may be helpful for range filtering during data aggregation.

Fourthly, a Database 128 may be responsible for persisting the data records (including DPF keys and obfuscated event data) submitted by the users 110. As stated above, it may also store linkages between DPF keys and data points.

### Implementations - Data aggregation

As discussed above with reference to Fig. 5, a computer-implemented method 500 for associating user interaction with content 160 may be performed at an entity 130 of a system 100 associated with content 160 and may comprise a step 530 of aggregating the indication data of the first record 140A with the indication data of the second record 140B or of aggregating the first and second aggregated first portions, and a step 540 of recovering the indication data from the first and second records 140A, 140B or from the first and second aggregated first portions. Procedures of secure data aggregation that may performed by the sub-systems and/or entity are now described in more detail with reference to a content provider (e.g., an advertiser), a kind of entity 130.

Firstly, a content provider may specify a query *policy* and send a *hash*(*policy*) to each *system_{b}.* Each *system_{b}* may have *m* DPF keys associated with *n* records where *m* ≤ *n.* Each *system_{b}* first maps the hash into a finite field *Z_{M}* and then evaluates it with DPF keys $\left\{{k}_{b}^{0},{k}_{b}^{1},…,{k}_{b}^{m - 1}\right\}$*.* Corresponding DPF evaluation values $\left\{{T}_{b}^{0},{T}_{b}^{1},…,{T}_{b}^{m - 1}\right\}$ can be obtained from: ${T}_{b}^{i} = DPF . Eval \left({k}_{b}^{i},hash\left(policy\right)%M\right)$ with *i* ∈ {0,1, ... ,*m* - 1}, *b* ∈ {0,1}.

Secondly, each *system_{b}* calculates an aggregation over the data and multiplies the sum with each ${T}_{b}^{i}$*.* Denoting the aggregation as *C_{b}:* ${C}_{b} = {\sum }_{i = 0}^{m - 1} \left({T}_{b}^{i}⋅{\sum }_{r ∈ {U}^{i}} O {\left(d\right)}^{r}\right)$ where *Uⁱ* is the set of records {*r*} corresponding to DPF Key ${k}_{b}^{i}$*.* The systems respectively send *C*₀ and *C*₁ back to the content provider.

Thirdly, the content provider sums *C*₀ and *C*₁, i.e.: $\begin{matrix}{C}_{0} + {C}_{1} = {\sum }_{i = 0}^{m - 1} \left({T}_{0}^{i}+{T}_{1}^{i}\right) \left({\sum }_{r ∈ {U}^{i}} O {\left(d\right)}^{r}\right) \\ = {\sum }_{r ∈ {U}^{N}} \left(O{\left(d\right)}^{r}\right) \\ = \left|{U}^{N}\right| E \left(O\left(d\right)\right) \\ = \left|{U}^{N}\right| \left(μ+E\left(d\right)\right)\end{matrix}$ where *U^{N}* is the set of records matching the query policy, and |*U^{N}*| is the size of the set. For counting tasks where *µ + E*(*d*) *=* 1, *C*₀ + *C*₁ = |*U^{N}*| is the aggregated result counting the number of records matching the query. For measuring tasks where *E*(*d*) is unknown or hard to estimate, the content provider can, if appropriate using partial results from each of the systems, calculate |*U^{N}*| using the following alternative method: $\begin{matrix}{\left|{U}^{N}\right|}_{0} + {\left|{U}^{N}\right|}_{1} = {\sum }_{i = 0}^{m - 1} \left({T}_{0}^{i}+{T}_{1}^{i}\right) \left({\sum }_{r ∈ {U}^{i}} 1\right) \\ = {\sum }_{r ∈ {U}^{N}} \left(1\right) \\ = 1 ⋅ \left|{U}^{N}\right|\end{matrix}$ Then, the content provider calculates *C*₀ + *C*₁ as previously described. With |*U^{N}*|₀ + |*U^{N}*|₁ and *µ*, the content provider can easily recover *E*(*d*) with the following formula: $E \left(d\right) = \frac{{C}_{0} + {C}_{1}}{{\left|{U}^{N}\right|}_{0} + {\left|{U}^{N}\right|}_{1}} - μ$

### Hardware

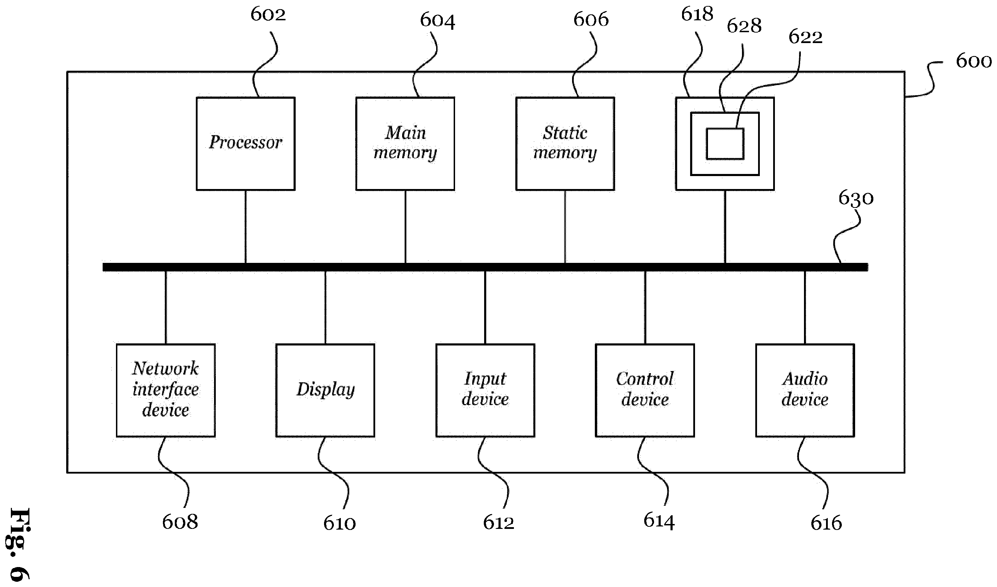

A computing apparatus or system 100 as described in relation to Fig. 1 may be provided by means of the processing system or computing device 600 schematically shown in Fig. 6. A different processing system 600 may be used to implement each logic block described with reference to Fig. 1, e.g., a different processing system 600 for each user device 110, each sub-system of the DAS 120, and each entity 130. Each of these may itself be implemented using one or more suitably-configured processing systems 600.

With reference to Fig. 6, processing system 600 suitable for carrying out the methods described herein will now be described. Fig. 6 shows a block diagram of one implementation of a processing system 600 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 600 includes a processor 602, a main memory 604 (e.g., read-only memory (ROM), flash memory, dynamic random-access memory (DRAM) such as synchronous DRAM (SDRAM) or Rambus DRAM (RDRAM), etc.), a static memory 606 (e.g., flash memory, static random-access memory (SRAM), etc.), and a secondary memory (e.g., a data storage device 618), which communicate with each other via a bus 630.

Processor 602 represents one or more general-purpose processors such as a microprocessor, central processing unit, or the like. More particularly, the processor 602 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 602 may also be one or more special-purpose processors such as an application specific integrated circuit (ASIC), a field programmable gate array (FPGA), a digital signal processor (DSP), network processor, or the like. Processor 602 is configured to execute the processing logic (instructions 622) for performing the operations and steps described herein.

The processing system 600 may further include a network interface device 608. The processing system 400 also may include any of a video display unit 610 (e.g., a liquid crystal display (LCD) or a cathode ray tube (CRT)), an alphanumeric input device 612 (e.g., a keyboard or touchscreen), a cursor control device 614 (e.g., a mouse or touchscreen), and an audio device 616 (e.g., a speaker).

It will be apparent that some features of the processing system 600 shown in Fig. 6 may be absent. For example, the processing system 600 may have no need for display device 610 (or any associated adapters). This may be the case, for example, for particular server-side computer apparatuses which are used only for their processing capabilities and do not need to display information to users. Similarly, user input device 612 may not be required. In its simplest form, processing system 600 comprises processor 602 and main memory 604.

The data storage device 618 may include one or more machine-readable storage media (or more specifically one or more non-transitory computer-readable storage media) 628 on which is stored one or more sets of instructions 622 embodying any one or more of the methods or functions described herein. The instructions 622 may also reside, completely or at least partially, within the main memory 604 and/or within the processor 602 during execution thereof by the processing system 600, the main memory 604 and the processor 602 also constituting computer-readable storage media 628.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 602 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

There is described herein a computer-implemented method for associating user interaction with content performed at a user device, a computer-implemented method for associating user interaction with content performed at an anonymising distributed analysis system (DAS), and a computer-implemented method for associating user interaction with content performed at an entity associated with the content. In these complementary methods, first and second records for first and second sub-systems of the DAS are used, both the first and second records being required in order to recover indication data and metadata encoded in said records.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method for associating user interaction with content, the method comprising, at a user device:
obtaining indication data and metadata descriptive of the user interaction with the content;
generating first and second records each comprising a first portion based on the indication data and a second, encrypted portion based on the indication metadata, wherein both the first and second records are required in order to recover the indication data and metadata; and
transmitting the first record to a first sub-system of an anonymising distributed analysis system, DAS, and transmitting the second record to a second sub-system of the DAS.

2. The method of claim 1, wherein the first and second sub-systems are respectively provided by separate first and second cloud service providers.

3. The method of any preceding claim, wherein generating first and second records comprises obfuscating the indication data,
optionally wherein the obfuscating uses a Laplace noise distribution to obfuscate the indication data; and
further optionally wherein the Laplace noise distribution is based on a first parameter influencing expected obfuscated indication data and on a second parameter influencing a variance of the obfuscated indication data,
yet further optionally wherein the first parameter is selected based on whether the indication data descriptive of user interaction with the content is indicative of a count of user interactions with the content or a measure of a duration of user interaction with the content.

4. The method of any preceding claim, wherein generating first and second records comprises encoding the indication metadata into the second portion of the first and second records as respective first and second Function Secret Sharing, FSS, keys,
optionally wherein the encoding uses a Distributed Points Function, DPF, scheme,
further optionally wherein the DPF scheme is selected based on a security type of the user interaction.

5. A computer-implemented method for associating user interaction with content, the method comprising, at a sub-system of an anonymising distributed analysis system, DAS:
receiving, from a user device, a first record comprising a first portion that was generated based on indication data descriptive of the user interaction with the content and a second, encrypted portion that was generated based on indication metadata descriptive of the user interaction with the content, wherein a second record that was also generated based on the indication data and metadata and that is not received at the sub-system is required in addition to the first record to recover the indication data and metadata; and
A) sending the first record to an entity associated with the content, or
B) aggregating the first portion of the first record with one or more other first portions of other records which have been received by the first sub-system to produce an aggregated first portion and sending the aggregated first portion to an entity associated with the content.

6. The method of claim 5, wherein the first sub-system is provided by a first cloud service provider separate from a second cloud service provider at which the second record was received.

7. The method of any of claims 5 to 6, further comprising storing the first record in a first database.

8. The method of any of claims 5 to 7, further comprising:
receiving, from the entity associated with the content, a request to retrieve
A) the first record or
B) the aggregated first portion,
wherein the sending is in response to the receiving the request.

9. The method of claim 8, wherein the request includes a Function Secret Sharing, FSS, key, optionally wherein the FSS key is a Distributed Points Function, DPF, key.

10. A computer-implemented method for associating user interaction with content, the method comprising, at an entity associated with the content:
A) receiving a first record from a first sub-system of an anonymising distributed analysis system, DAS; and
receiving a second record from a second sub-system of the DAS, wherein both the first and second records are required in order to recover indication data and metadata descriptive of the user interaction with the content, and wherein the first and second records each comprise a first portion based on the indication data and a second, encrypted portion based on the indication metadata; and
recovering the indication data from the first and second records, or
B) receiving, from a first sub-system of an anonymising DAS, a first aggregated first portion which has been produced by aggregating a first portion of a first record with one or more other first portions of other records which have been received by the first sub-system;
receiving, from a second sub-system of the anonymising DAS, a second aggregated first portion which has been produced by aggregating a first portion of a second record with one or more other first portions of other records which have been received by the second sub-system, wherein both the first and second aggregated first portions are required in order to recover indication data descriptive of the user interaction with the content, and wherein the first portion of each of the first and second records is based on the indication data; and
recovering the indication data from the first and second aggregated first portions.

11. The method of claim 10, wherein the recovering comprises:
A) aggregating the indication data of the first record with the indication data of the second record, or
B) aggregating the first and second aggregated first portions.

12. The method of any of claims 5 to 11, wherein the indication data is obfuscated indication data,
optionally wherein the indication data has been obfuscated using a Laplace noise distribution.
further optionally wherein the recovering comprises reversing the obfuscation of the obfuscated indication data of the first and second records.

13. The method of any of claims 10 to 12, wherein the recovering includes using a Function Secret Sharing, FSS, key to retrieve the indication data and metadata from the first and second records, optionally wherein the FSS key is a Distributed Points Function, DPF, key.

14. The method of any of claims 4, 9, or 13, wherein the FSS key or keys are determined in accordance with a scheme specified by an or the entity associated with the content.

15. A computing apparatus or system configured to perform the method of any of claim 1 to 14, or
one or more computer-readable media storing instructions which, when executed by a computing apparatus or system, cause the computing apparatus or system to perform the method of any of claim 1 to 14.
